# EUROPEAN PATENT APPLICATION

(11) **EP 4 219 976 A1**
(43) Date of publication of application: **02.08.2023**
(21) Application number: 22154054.5
(22) Date of filing: 28.01.2022
(51) Int. Cl.: F16D 65/18, F16D 55/226, F16D 65/00

(54) **PARK BRAKE CALIPER WITH INVERTED LEVER CONFIGURATION**

(71) Applicant: KNORR-BREMSE Systeme für Nutzfahrzeuge GmbH, 80809 München (DE)
(72) Inventor: LISEVA, Ekaterina, 80636 München (DE); BLESSING, Michael, 80687 München (DE); KLINGNER, Matthias, 82275 Emmering (DE); PESCHEL, Michael, 82296 Schöngeising (DE); GYÖRKE, Zsombor, 8360 Keszthely (HU); MLINARCSEK, Csaba, 1165 Budapest (HU); SCHALLER, Sebastian, 86462 Langweid (DE); STANKOVIC, Dordo, 81929 München (DE); SZABO, Janos, 1101 Budapest (HU); KOKREHEL, Csaba, 1119 Budapest (HU); HÖS, Levente, 1047 Budapest (HU); MONORI, Gyula, 6065 Lakitelek (UG); KRÜGER, Sven Philip, 81476 München (DE); SCHÖFBERGER, Tobias, 84048 Mainburg (DE); HEIGL, Korbinian, 85652 Pliening (DE); GEIS-ESSER, Daniel, 81377 München (DE)
(74) Representative: Prüfer & Partner mbB Patentanwälte · Rechtsanwälte

(57) **Abstract**

The present application deals with a park brake caliper (1) for a utility vehicle which comprises an actuating unit (2), which is adapted to move a push rod (5), wherein the push rod (5) is pre-tensioned by a tensioning means, e.g. spring (4), in one direction, but is adapted to be pressed the opposite direction by pneumatic, hydraulic, electromechanical or magnetic force, and an application unit (3) which comprises a brake lever (6), which is pivotably supported around a pivot axis (6b) and which is adapted to rest at the push rod (5) at one side and at a bridge (7) on the other side via an excenter (6a), wherein the application unit (3) is adapted to be positioned around an axle (A) of a utility vehicle, and wherein the bridge (7) is adapted to press at least one brake pad (8) against a brake disk (D) of the utility vehicle, and wherein the lever (6) points downwards towards the axle (A) in all its positions.

Further, a brake system is disclosed, where park brake caliper (1) and a service brake caliper (S) are radially spaced from each other.

Such design allows freeing axial space in the vicinity of the knuckle of a utility vehicle, being relevant for accommodation of components for electric driving.

## Description

Brake systems for commercial vehicles or utility vehicles typically include a park brake and a service brake. Usually, said park brake and said service brake are arranged in one caliper.

A typical brake caliper includes an actuating unit, which generates the brake force, and an application unit, which forces friction material into contact with a brake disk or a brake drum assembly. A service brake actuator normally actuates a brake under the normal driving conditions, and a park brake actuator (e.g. containing a compressed spring in a released state) is used for actuating the brakes when power is removed and the vehicle stands still.

An application unit arranged in a brake caliper is designed to accommodate the application of the input force at a certain angle to the axis of operation of the application unit, and normally includes a force multiplier (e.g., a lever with bearing surfaces).

Document DE 10 2013 100 173 A1 describes a disk brake for a utility vehicle. It discloses a caliper with a pivotable braking lever designed with an excenter, which rests at the caliper and a bridge part. A brake pad is connected to the bridge part. During parking of the vehicle, a spring forces the lever into a position where it presses the bridge in the direction of the brake pads, and the brake pads press against the brake disk. In released condition, the lever is not forced against the bridge part, and hence, pads are not forced against the brake disk.

Usually, an application unit with a pivotable brake lever requires enough space for accommodating its functional parts (in particular brake lever and bridge) in the caliper, and regularly, the actuation unit is disposed in the upper part of the application unit and sometimes even points upwards (i.e. away from the axle when mounted in a 12 o'clock position), as also being the case in document DE 10 2013 100 173 A1. A flange is regularly used for connecting the application unit and the actuation unit, being provided either along a substantially parallel axis with respect to the application unit or being mounted at an angle of 90° with respect to the application unit, e.g. the middle axis of the application unit.

Because of the electrification in commercial vehicles, axial space is sometimes not present close to knuckles, and hence, actual space savings are very important, in particular in view of driveline and battery packaging.

A conventional park brake cylinder, which usually is part of a combined brake cylinder used for both, service and parking brake functions, takes up a lot of valuable axial space.

For passenger cars, a splitting of the calipers has already been performed, wherein separate calipers for the park brake and for the service brake are provided.

A combined service and parking brake, particularly in the case of actuators comprising a service chamber and a parking chamber, is difficult to be positioned in 3 o' clockposition or 9 o'clock position at the front axis of a commercial vehicle due to the axial length of the combined cylinder which will get in collision with other axial components, once integrated there, or due to the steering angle, which might play a role. This in particular is true for novel wheel-individual suspensions with high steering angles and a knuckle design that does not allow the conventional 12 o'clock-position of a combined brake actuator.

In electric vehicles, a compact drive train design freeing up space for batteries, fuel cell components, and lock brake modulators etc. is needed, to achieve higher drive train efficiencies or a wheel-individual drive. High drivetrain power is needed for heavy-duty applications, leading to significantly increased lateral space demand in-between the wheels of the driven axle.

However, the axial length of the park brake actuator is often larger than the service brake actuators. If they are combined at one caliper, the needs for realization of electric drives cannot be met due to spatial shortage at the axle.

A technical problem of the present invention can hence be seen in providing a spatially optimized brake arrangement for use in commercial vehicles, in particular in seeking for axial length reduction of the brake system.

The technical problem is solved by a park brake caliper according to claim 1 and a brake system according to claim 15. Further advantages and embodiments of the present invention are subject-matter of the dependent claims.

A park brake caliper according to the present application comprises an actuation unit, which is adapted to move a push rod. The push rod adapted to be pressed in one direction, but can be pressed in the opposite direction by energy supply.

The application unit comprises a brake lever, which is pivotably supported around a pivot axis and which is adapted to rest at the push rod at one side and to the bridge on the other side via an excenter.

The application unit is adapted to be positioned around an axle of a utility vehicle, and the bridge is adapted to press at least one brake pad against the brake disk of a utility vehicle. The lever points towards the axle in all its positions.

Towards to axle means pointing somehow to the axle - but does not necessarily mean it has to strictly follow the gravitational direction in this case. In prior art, the lever points in the direction away from the axle. The term pointing refers to the extension of the long part of the lever, considered in relation to the pivot point or the pivoting axis.

Hence, a park brake actuator can be positioned independently from any service brake actuator, hence reducing the actual length of the park brake actuator, as no combined actuator (together with a service brake) is used.

The bridge and the maximum radial lever position are designed to be within the allowable radial placement within a given rim, by realizing an inverted actuator lever arm placement with an inverted pivot axis. Hence, a larger part of the caliper can at least be partly arranged within the wheel rim.

Preferably, the push rod is pre-tensioned, further preferably by a spring, in one direction in order to force the bridge to press at least one brake pad against a brake disk of the utility vehicle, but is adapted to be pressed the opposite direction by a pneumatic, hydraulic, electromechanical or magnetic force (in order to release the brake), if said pneumatic, hydraulic, electromechanical or magnetic force is higher than the force generated by the pre-tensioning member, e.g. spring. The push rod could also be pre-tensioned by other components, e.g. clutches.

Preferably, the axis of motion of the push rod of the actuating unit and the axle including an angle between 10° and 80°, more preferably between 15° and 75°, even more preferably between 20° and 75°, and even more preferably between 45° and 75°.

By arranging the actuating unit in said angle allows a compact design of the caliper, as the actuating unit is connected to the application unit in a way that space can be saved, as the actuation unit points in an oblique direction (e. g. upwards).

Preferably, the park brake caliper further contains a second push rod accommodated in an additional chamber (e.g. pneumatic chamber or chamber accommodating hydraulic, magnetic or electromechanical components), said second push rod being adapted to transmit forces to the brake lever on the opposite side of the brake lever compared to the first push rod. The additional chamber is further preferably positioned on the opposite side of the brake lever compared to the first push rod and preferably the spring. In this embodiment, the actuating unit is split into two parts, disposed on opposite sides of the lever and the application unit. Hence, the additional chamber or the spring assembly can be positioned at least partially inside the wheel rim, hence further reducing the axial space for the park brake caliper.

Preferably, the middle axis of the bridge has a smaller distance from the axle than the pivoting axis of the lever.

By such configuration, the transmission of forces is optimized. Further a common spring chamber can be used, e.g. a push type design. Further, a common emergency release design (e. g. with the help of a screw) can be easily implemented, as such emergency release screw is easily accessible in this case.

More preferably, the joint between the push rod and the lever or the instantaneous center for rotation of the push rod and the lever has a smaller distance to the axle compared to the bridge plane. In other words: All kinematic parts are below the bridge plane, preferably at least the lever, the push rod and the spring.

Also this design allows a compact arrangement of all kinematic parts and further an optimized transmission of forces.

In this embodiment, the push rod is pushed against the lever.

In another embodiment, the middle axis of the bridge has a larger distance from the pivoting axis of the lever.

In that embodiment, the force of the spring pulls the rod (in this case: a pull rod) and the lever, hence forming a pull-connection.

The caliper in this case can contain less parts above the bridge plane, and the rod (here a pull rod) could be designed thinner, as there is no danger of a buckling problem. Furthermore, the caliper could be designed in a more flat manner. Further the inverted positioning of the additional chamber and spring part leads to a better pneumatic piping accessibility.

Preferably, the actuating unit has a housing, and the application unit also has a housing. Then, the actuating unit is connected to the application unit by a flange, and more preferably at least a part of the flange, even more preferably the whole flange, is positioned below the bridge plane.

The arrangement of actuating unit and application unit in separate housings also allows a very compact design, and these parts can be fabricated independently from each other, and also can be changed at a vehicle with less work. The flange lying below the bridge plane also allows an improved transmission of forces. Modularity and scalability is enabled by combining one type of application unit with different types of actuation units. This further enhances realizing a parking brake torque adaptation as required depending on vehicle class or axle application (a front axle requires usually lower parking brake torque than a rear axle).

Preferably, the actuating unit and the application unit are disposed in a common housing.

Hence, the actuation system, e.g. pneumatic system , can be assembled with a brake, and no separate flange is necessary, being the reason why this solution saves costs. Further, a reduction of weight of the caliper is enabled, because of a function integration of parts - e.g. no flange and connection screws are needed. A low weight is always beneficial for brake parts, because they count to the unsprung mass of a wheel end. It should be emphasized that the actuation can also be performed via a hydraulic, magnetic or electromechanical system,

More preferably, the plunger and the lever are integrally formed in one combined member. Also, this design allows using of less parts, facilitating the mounting of the park brake caliper.

Preferably, the surface of the application unit, in particular of its housing, is flat or slightly curved, but the curve would be parallel to the curve of the wheel rim.

A hump is more preferably provided in the uppermost surface of the application unit in order to stabilize the whole system by adding stiffness to the caliper.

The caliper can be of a floating type.

A (one) carrier (for the brake pads) can be used - but also, the brake pads can be mounted to the caliper directly, hence not necessitating a carrier.

A brake system according to the present invention comprises a park brake caliper as described before, and a service brake caliper. Both can have separated actuators. The friction pairings (brake pads) of the park brake caliper and the service brake caliper are radially spaced from each other, i.e. are positioned at radially different positions on a brake disk. Preferably, also the park brake caliper and the service brake caliper are radially separated.

Hence, the axial length of the brake system can be reduced, as both calipers are radially separated and do not interfere with each other.

Even more preferably, the friction pairing between the park brake pads and brake disc has a larger friction radius than the friction pairing between service brake pads and brake disc.

Hence, the park brake can achieve a higher park brake torque at a given clamping force, and hence, the park brake can also be used as a booster for the service brake.

More preferably, the brake pads of the park brake and the brake pads of the service brake are guided by a respective carrier, wherein the carriers are preferably connected. For the case of separate carriers, there is more flexibility for the placement of the service brake and the park brake around the rim. For the case of a common (connected) carrier, there are cost/weight savings, since only one connection to the wheel hub is needed.

In the following, embodiments of the present application are described with the attached figures.
- Fig. 1: is a park brake caliper 1 according to a first embodiment of the present invention.
- Fig. 2: is a park brake caliper 1 according to a second embodiment of the present invention.
- Fig. 3: is a park brake caliper 1 according to a third embodiment of the present invention.
- Fig. 4: is a park brake caliper 1 according to a fourth embodiment of the present invention.
- Fig. 5: is a park brake caliper 1 according to a fifth embodiment of the present invention.
- Fig. 6: is a park brake caliper 1 according to a sixth embodiment of the present invention.
- Fig. 7: is a park brake caliper 1 according to a seventh embodiment of the present invention.
- Fig. 8: shows arrangements of a park brake caliper 1 and a service brake caliper S on a brake disk D.

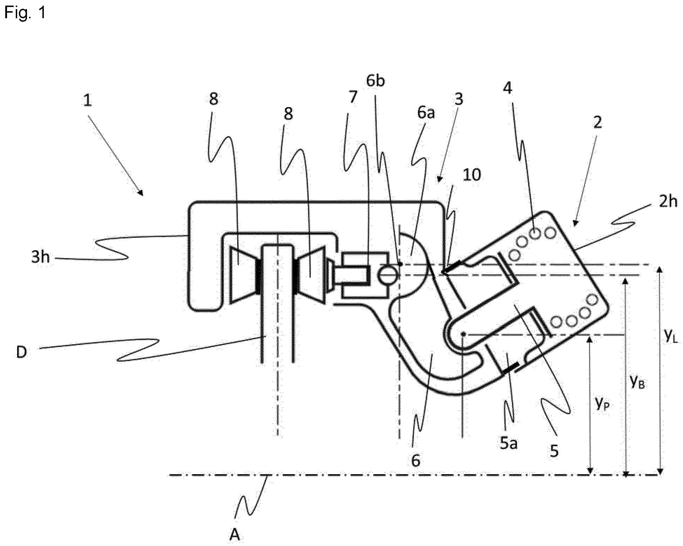

It should be emphasized that Fig. 1 to 8 are schematical drawings. Of course, housings need to provide sufficient space so that the lever can make a movement which is suitable to perform the braking / releasing action.

Fig. 1 shows a brake caliper 1 according to a first embodiment of the present invention.

An application unit 3 (with a housing 3h) engages over a brake disk D connected to an axle A. Brake pads 8 are arranged at both sides of the brake disk D. At one side, a respective brake pad 8 is connected to a bridge 7. A lever 6 on its upper side rests against the bridge 7 via an excenter 6a, and is pivotably supported around a pivot axis 6b. On the other side, the lever 6 rests against a push rod 5, which belongs to an actuation unit 2 (with a housing 2h), which is connected to the application unit 3 via a flange 10. The push rod 5 is pressed by a spring 4 in the direction of the lever 6; however, a chamber 5a, in this case pneumatic chamber, is positioned between the spring 4 and the flange 10, and if pneumatic pressure is applied to the chamber 5a, the force of the spring 4 can be overcome and the push rod 5 can be pressed against the force of the spring 4, hence releasing the lever 6, which would lead to a situation that the brake pads 8 are not forced against the brake disk D. Herein, the distance between the pivot axis 6b of the lever 6 and the axle A is larger than the distance between the middle axis of the bridge 7 and the axle A. Even smaller is the distance between the lowest part of the push rod 5 and the axle A.

In all states, the lever 6 points towards the axle, i.e. in the direction of the axle A (in the embodiment of Fig. 1 downwards, as the caliper 1 is arranged in the 12 o'clockmounting position). That does not mean that the lever 6 strictly is aligned along the gravitational direction - but it points towards the axle A. In other words: The angle the gravitational direction and the middle axis of the lever 6 include, is below 90°.

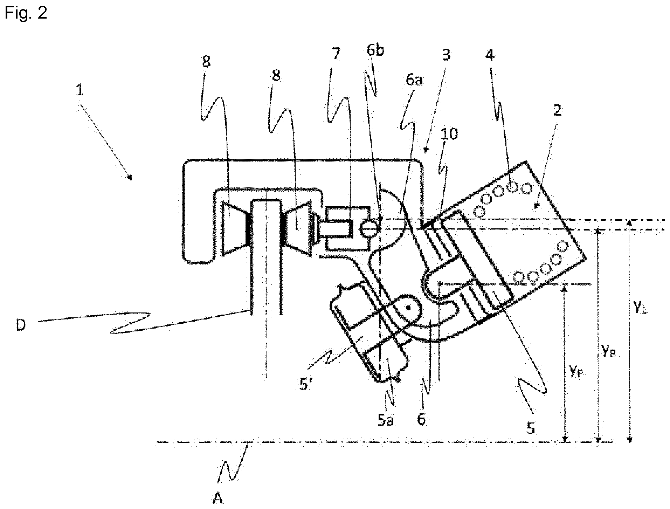

Fig. 2 shows a second embodiment of the present invention. This embodiment is similar to the first embodiment, however, there is a second push rod 5' which can be actuated by an additional chamber 5a, in this case pneumatic chamber. However, said additional chamber 5a is positioned on the other side of the actuation unit 3, hence, the first push rod 5 can press the lever 6 in one direction by the force of the spring 4, but if the additional chamber 5a is actuated, the second push rod 5' is adapted to push the lever 6 in the opposite direction. Again, in all states, the lever 6 points downwards, i.e. in the direction of the axle A.

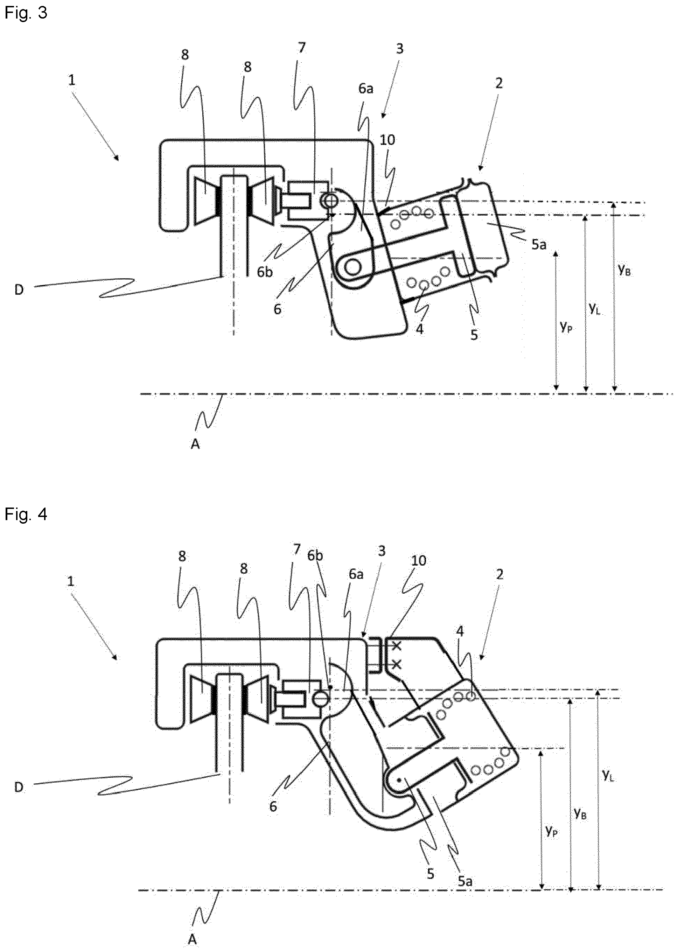

Fig. 3 shows a third embodiment of the present application. Herein, the difference is that the distance between the middle axis of the bridge 7 and the axle A is larger than the distance between the pivoting axis 6b of the lever 6 and the axle A. Also, the arrangement of the spring 4 and the chamber 5a with regard to the push rod 5 has been changed compared to the first embodiment (Fig. 1). Herein, the spring 4 pushes the push rod 5 in the direction away from the lever 6, leading to a state that the lever 6 is pulled, but pushes the bridge 7 against one of the brake pads 8, hence actuating the park brake. Upon pressurization of the chamber 5a (in this case: pneumatic chamber), the force of the spring 4 can be overcome, hence pushing the push rod 5 in the direction of the lever 6, leading to the state that the bridge 7 can move in the direction away from the one brake pad 8, hence leading to a released state of the brake. Herein, the flange 10 being adapted to connect the actuating unit 2 and the application unit 3 is at least partly below the bridge plane, being a plane parallel to the axle A and including the middle axis of the bridge 7.

However, if the force of the spring 4 is dominant over the force of the chamber 5a (in this case: pneumatic chamber), the push rod is forced in a direction so that it pulls the lever 6, hence pushing the bridge 7 against the brake pad 8, which again is pushed against the brake disk D.

Fig. 4 shows a fourth embodiment of the present invention. Herein, the flange 10 being adapted to connect the actuating unit 2 and the application unit 3 is realized differently, and the flange is provided on the side part of the actuation unit 2. Herein, the flange 10 is positioned above the bridge plane, being a plane parallel to the axle A and including the middle axis of the bridge 7.

Herein, packaging or accessibility of the flange connection can be improved, and still, a compact design can be achieved.

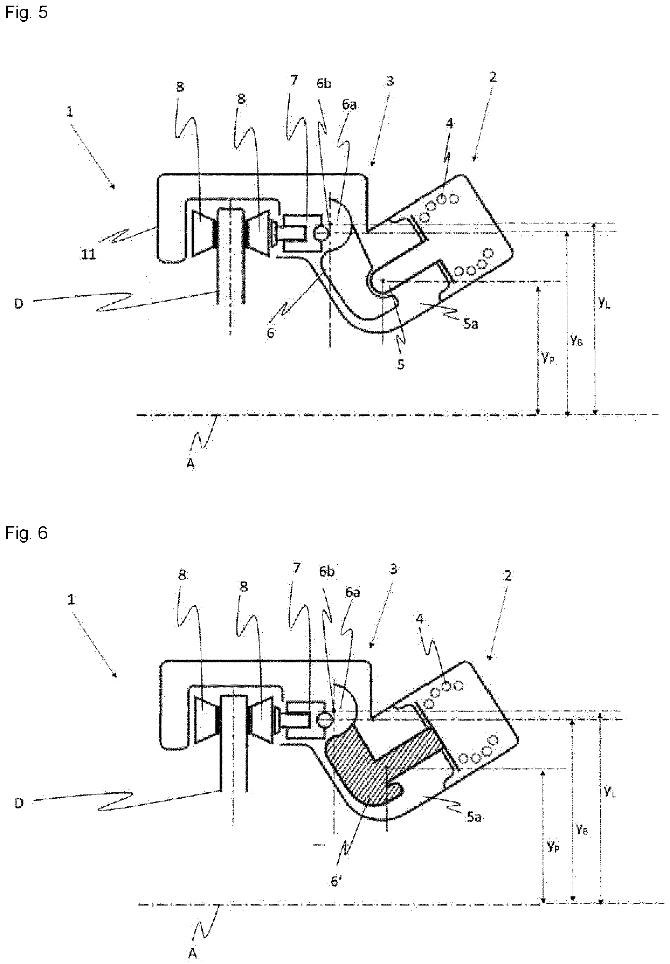

Fig. 5 shows an embodiment where the actuation unit 2 and the application unit 3 are disposed in a common housing 11. Hence, no flange is necessary any more.

Fig. 6 shows a sixth embodiment of the present invention. The main difference compared to the fifth embodiment is that there is a combined lever 6, which fulfills the function of a push rod of the previous embodiments and the lever of the previous embodiments together.

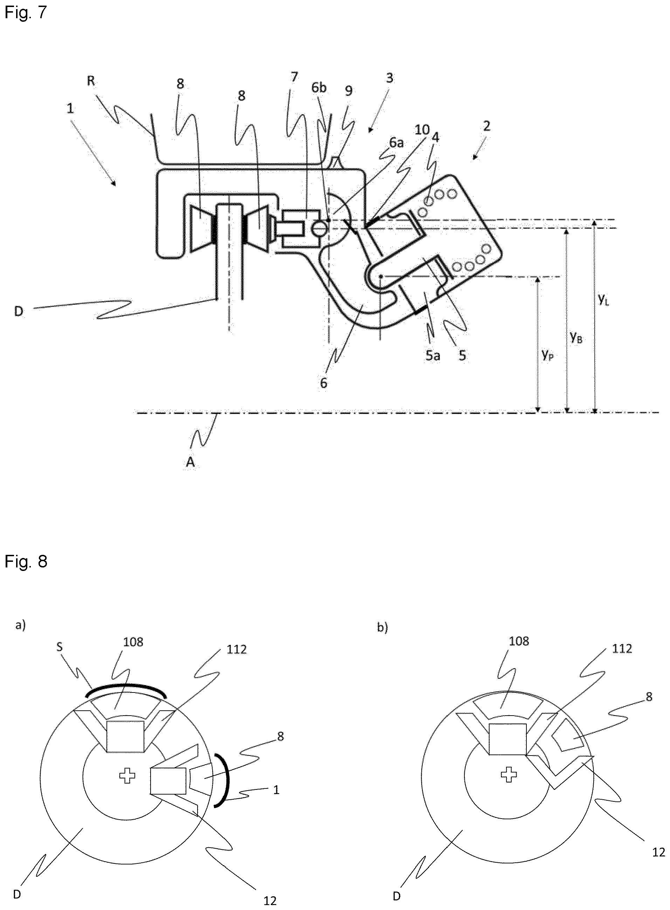

Fig. 7 shows a seventh embodiment of the present invention. Herein, the surface of the application unit 3 is very flat, and the arrangement of the whole park brake caliper 1 compared to a rim R of a wheel is shown. On the upper surface of the application unit 3, a hump 9 is provided. Such hump 9 can add additional stiffness to the caliper 1.

A high stiffness is always preferential, because it reduces the necessary clamping stroke in a caliper.

Fig. 8 shows two arrangements of a park brake carrier 12 with a respective brake pad 8 and a service brake carrier 112 with a respective brake pad 108 on a brake disk D.

In Fig. 8 a), the park brake carrier 12 with respective brake pad 8 and the service brake carrier 112 with a respective brake pad 108 are radially separated around the brake disk D, the park brake carrier 12 being on the 3 o'clock-position and the service brake carrier 112 being at the 12 o'-clock position in this example. The park brake caliper 1 and the service brake caliper S are also separated.

In Fig. 8 b), the park brake carrier 12 and the service brake carrier 112 are connected. However, the brake pad 8 of the park brake and the brake pad 108 of the service brake are still radially separated. Calipers are not shown in this figure.

The present invention is not limited to the embodiments as described above.

It would also be conceivable that the lever 6 can have different shapes.

Furthermore, different springs 4 can be used, for example flat springs or coil springs.

Not only pneumatic actuation, but also hydraulic, magnetic or electromechanical actuation is possible.

### REFERENCE SIGN LIST

- 1: Park brake caliper
- 2: Actuation unit
- 2h: Actuation unit housing
- 3: Application unit
- 3h: Application unit housing
- 4: Spring
- 5, 5': First push rod, second push rod
- 5a: Chamber, additional chamber
- 6, 6': Lever
- 6a: Excenter
- 6b: Pivot axis
- 7: Bridge
- 8: Brake pad (park brake)
- 9: Hump
- 10: Flange
- 11: Housing
- 12: Carrier (park brake)

- 108: Brake pad (Service brake)
- 112: Carrier (Service brake)

- D: Brake disk
- A: Axle
- R: Rim
- S: Service brake caliper

## Claims

1. Park brake caliper (1) for a utility vehicle, comprising:
an actuating unit (2), which is adapted to move a push rod (5), wherein the push rod (5) is adapted to be pressed in one direction, but is adapted to be pressed the opposite direction by energy supply,
an application unit (3) which comprises a brake lever (6), which is pivotably supported around a pivot axis (6b) and which is adapted to rest at the push rod (5) at one side and at a bridge (7) on the other side via an excenter (6a),
the application unit (3) adapted to be positioned around an axle (A) of a utility vehicle, wherein the bridge (7) is adapted to press at least one brake pad (8) against a brake disk (D) of the utility vehicle,
and wherein the lever (6) points towards the axle (A) in all its positions.

2. Park brake caliper (1) according to claim 1, wherein the push rod (5) is pre-tensioned, preferably by a spring (4), in one direction in order to force the bridge (7) to press at least one brake pad (8) against a brake disk (D) of the utility vehicle, but is adapted to be pressed the opposite direction by pneumatic, hydraulic, electromechanical or magnetic force.

3. Park brake caliper (1) according to claim 1 or 2, wherein the axis of motion of the push rod (5) of the actuating unit (2) and the axle (A) include an angle of between 10° and 80°, preferably between 15° and 75°, more preferably between 20° and 75°, even more preferably between 45° and 75°.

4. Park brake caliper (1) according to one of the previous claims, further containing a second push rod (5') accommodated in an additional chamber (5a), preferably being a pneumatic chamber, said second push rod (5') is adapted to transmit forces to the brake lever (6) on the opposite side of the brake lever (6) compared to the first push rod (5), and wherein the additional chamber (5a) is preferably positioned on the opposite side of the brake lever (6) compared to the first push rod (5).

5. Park brake caliper (1) according to one of the previous claims, wherein the middle axis of the bridge (7) has a smaller distance from the axle (A) than the pivoting axis (6b) of the lever (6).

6. Park brake caliper (1) according to one of the previous claims, wherein the joint between the push rod (5) and the lever (6) or the instantaneous center of rotation of the push rod (5) and the lever (6) has a smaller distance to the axle (A) compared to the bridge plane.

7. Park brake caliper (1) according to one of claims 1 to 4, wherein the middle axis of the bridge (7) has a larger distance from the axle (A) than the pivoting axis (6b) of the lever (6).

8. Park brake caliper (1) according to one of the previous claims, wherein the actuating unit (2) has a housing (2h) and the application unit (3) has a housing (3h), and the actuating unit (2) is connected to the application unit (3) through a flange (10), wherein said flange (10) lies at least partially below the bridge plane, preferably below the bridge plane.

9. Park brake caliper (1) according to any of claims 1 to 8,
wherein the surface of the application unit (3) is flat or curved, wherein a hump (9) is provided in the uppermost surface of the application unit (3).

10. Park brake caliper (1) according to one of claims 1 to 7 or 9, wherein the actuating unit (2) and the application unit (3) are disposed in a common housing (11)

11. Park brake caliper (1) according to one of claims 1 to 10, wherein the push rod and the lever are integrally formed in one combined member (6').

12. Park brake caliper (1) according to one of claims 1 to 11, wherein the caliper is of the floating type.

13. Park brake caliper (1) according to one of claims 1 to 12, wherein a carrier (12) for brake pads (8) is provided on the caliper (1).

14. Park brake caliper (1) according to one of claims 1 to 12, wherein brake pads (8) are directly mounted to the caliper (1).

15. Brake system, comprising a park brake caliper (1) according to one of claims 1 to 14 and a service brake caliper (S), wherein the brake pads (8, 108) of the park brake caliper (1) and the service brake caliper (S) are radially spaced from each other.

16. Brake system according to claim 15, wherein the friction pairing between the park brake pads (8) and brake disc (D) has a larger friction radius than the friction pairing between service brake pads (108) and brake disc (D).

17. Brake system according to claim 15 or 18, wherein the brake pads (8) of the park brake and the brake pads of the service brake (108) are guided by a respective carrier (12, 112), wherein the carriers (12, 112) are preferably connected.
